# EUROPEAN PATENT SPECIFICATION

(11) **EP 1 767 448 B1**
(45) Date of publication and mention of the grant of the patent: **29.07.2009**
(21) Application number: 06020184.5
(22) Date of filing: 26.09.2006
(51) Int. Cl.: B62M 7/02, B60K 6/08, B60K 1/04

(54) **Electric vehicle**
Elektrisches Fahrzeug
Véhicule électrique

(30) Priority: 26.09.2005 JP 2005277290
(43) Date of publication of application: 28.03.2007
(73) Proprietor: Yamaha Hatsudoki Kabushiki Kaisha, Iwata-shi, Shizuoka-ken 438-8501 (JP)
(72) Inventor: Kobayashi, Kenji, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 132 251
- EP-A- 1 251 022
- EP-A1- 1 164 049
- EP-A1- 1 389 552
- EP-A2- 1 533 173
- DE-A1- 10 328 582
- JP-A- 2001 130 468
- US-A- 5 193 635
- US-A- 6 155 369
- US-A1- 2003 094 324
- US-A1- 2004 050 606
- US-B1- 6 326 765

## Description

The present invention relates to a fuel-cell-driven electric vehicle utilizing the electric power generated by a fuel-cell system for operation.

Conventionally, fuel-cell-driven electric vehicle utilizing the electric or closest prior art document EP 1 164 049 power generated by a fuel-cell system for operation is applied (see JP-A-2001-130468). In the fuel-cell-driven electric vehicle disclosed in these Patent Documents, a front frame, a center frame and a rear frame constitute a vehicle body frame, and in the lower part of the center frame, some space having an open face at the bottom and on both sides is formed. A cell-stuck body serving as a fuel cell is detachably mounted in this space.

However, since the fuel cell is disposed in the lower part of the vehicle body frame in the conventional fuel-cell-driven electric vehicle described above, the fuel-cell has to be dismounted from the vehicle body frame to perform the maintenance work on the fuel-cell. In such cases, dismounting and mounting the fuel-cell from and to the vehicle body frame are a troublesome job, because various components are connected to the fuel cell via the wiring and other measures.

The present invention has been made to solve the problem mentioned above. It is therefore an object of the invention to provide a fuel-cell-driven electric vehicle that allows easy maintenance without the need for removing the fuel-cell system from the vehicle body.

This objective is solved in an inventive manner by the invention as claimed in independent claim 1.

According to a preferred embodiment, the electric vehicle utilizes the electric power generated by the fuel-cell system for operation, wherein the fuel-cell accommodating part has an opening and closing lid on the top of it, and wherein the fuel cell accommodating part is provided between a front wheel and a rear wheel on the vehicle body of the fuel-cell-driven electric vehicle for installing the fuel-cell system inside the fuel-cell accommodating part.

Preferably, the vehicle body has a vehicle body frame constituting the major part of the vehicle body, and a subframe detachably mounted to the vehicle body frame and extending in fore-and-aft direction above the fuel-cell accommodating part, with the secondary cell being attached to the subframe.

Further, preferably the vehicle body frame has a head pipe joining a handle at its upper end while rotatably supporting the steering shaft joining the front wheel via the connecting member at its lower end, and a down tube having a pair of members extending from the head pipe slantingly downward to the rear, then extending generally horizontally to the rear passing through the left and right sides of or below the fuel-cell accommodating part and further extending slantingly upward to the rear, with the subframe bridging the forward part and the rear part of the down tube.

Still further, preferably a cross member is laid across the pair of members constituting the down tube at the rear part of the down tube, while a pair of left and right attaching portions are provided in the rear part of the subframe, with these attaching portions detachably fastened to both sides of the cross member.

Yet further, preferably various on-board devices are fixed to the vehicle body frame, including: the radiator and the water pump constituting the cooling system; components for cooling the fuel-cell system; the air compressor and the air cleaner constituting the air system component for delivering the air to the fuel-cell system, and the hydrogen storage container constituting the hydrogen system component for delivering the hydrogen to the fuel-cell system.

According to another embodiment, the secondary cell is disposed a little forward of the fuel-cell accommodating part, the radiator is fixed in front of the vehicle body frame, the water pump is installed in front of the fuel-cell accommodating part and below the secondary cell, an outgoing part of a cooling water pipe connecting the radiator and the fuel-cell system is routed from the radiator along the vehicle body frame to the water pump and further routed from the water pump through the area below the subframe to be connected to the fuel-cell system via the front face of the fuel cell accommodating part, and a returning part of the cooling water pipe is routed from the fuel-cell system via the font face of the fuel-cell accommodating part along the vehicle body frame to the radiator.

Preferably, the hydrogen storage container is installed in the upper rear part of the vehicle body frame.

Further, preferably the air compressor is installed below the hydrogen storage container and in the rear vicinity of the fuel-cell accommodating part, and that a seat is installed above the hydrogen storage container.

Yet further, preferably a length of the unit body along the vehicle body width is set to be smaller than a length of the fuel-cell accommodating part along the vehicle body width.

Yet further still, preferably the fuel-cell-driven electric vehicle is a motorcycle, a motor three-wheeler, or a motor four-wheeler.

In the following, the present invention is explained in greater detail with respect to several embodiments thereof in conjunction with the accompanying drawings, wherein:
- FIG. 1: is a perspective view of a motorcycle according to an embodiment,

- FIG. 2: is a side view of the motorcycle,
- FIG. 3: is a top plan view of the motorcycle,
- FIG. 4: is a front view of the motorcycle,
- FIG. 5: is a perspective view showing the motorcycle after removing the unit body, and
- FIG. 6: is a block diagram showing the major parts of the motorcycle.

### Description of Reference Numerals:

- 10:: motorcycle
- 10a:: vehicle body
- 11:: front wheel
- 12:: rear wheel
- 13:: vehicle body frame
- 14:: subframe
- 15:: head pipe
- 16:: down tube
- 16a,: 16b: main frame
- 17:: front fork
- 18:: steering shaft
- 19:: handlebar
- 22:: cross member
- 22a,: 22b, 26c, 26d: attaching pieces
- 24:: fuel-cell accommodating part
- 24a:: opening and closing lid
- 25:: fuel-cell system
- 28:: mounting bolt
- 31:: secondary cell
- 33:: unit body
- 34:: radiator
- 35:: water pump
- 36a,: 36b: cooling water pipe
- 37:: hydrogen cylinder
- 38:: seat
- 41:: air cleaner
- 42:: air compressor

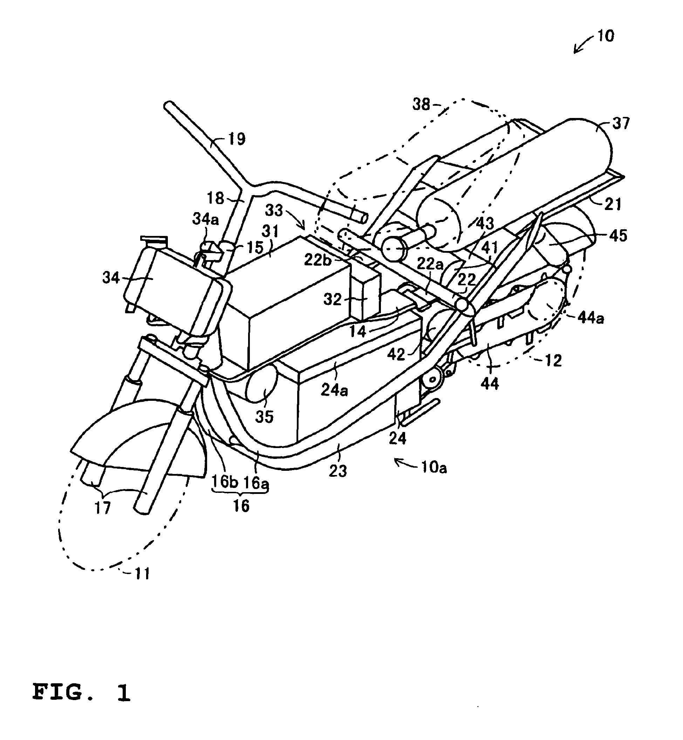

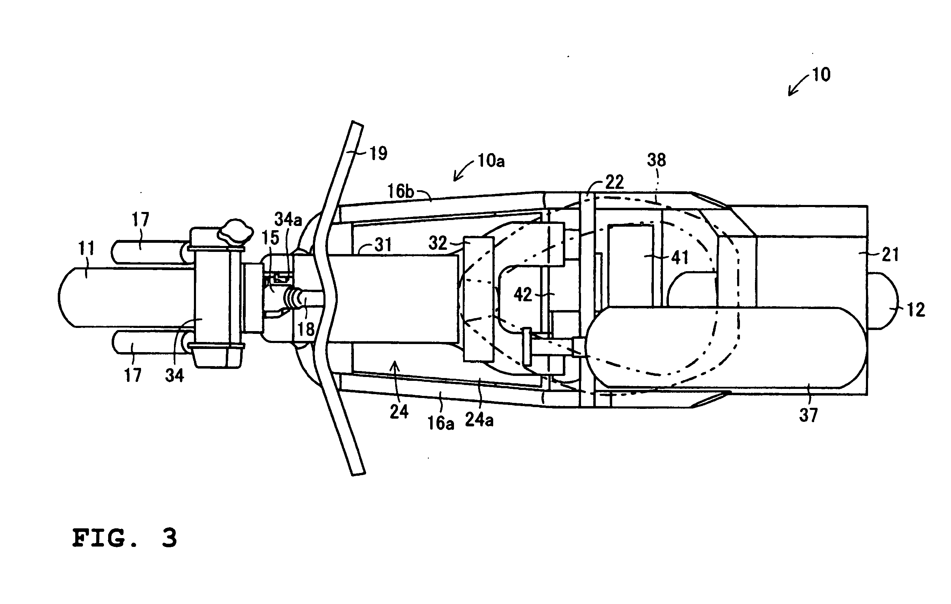

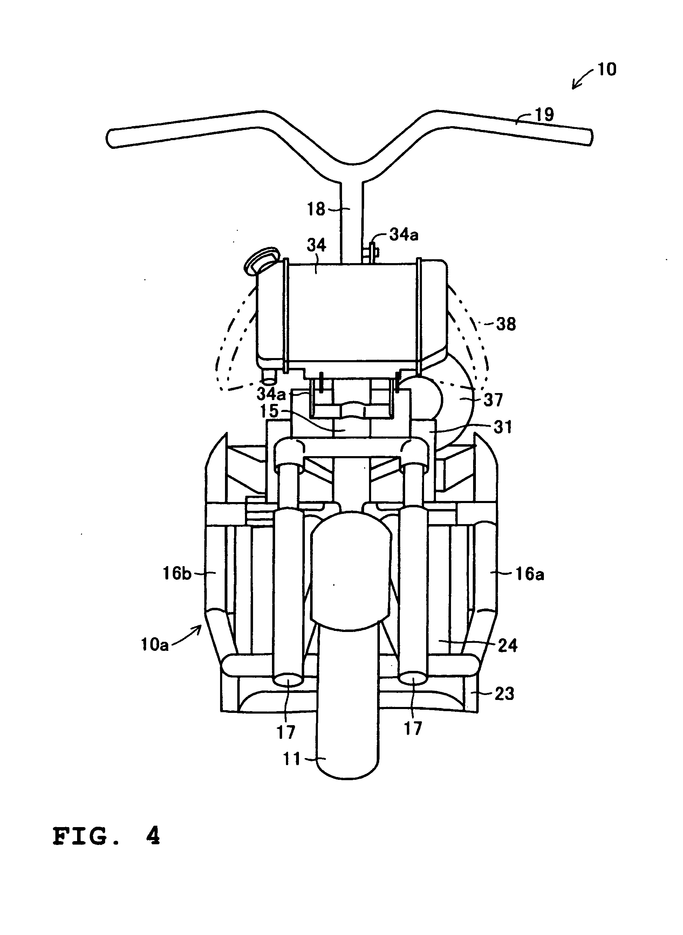

Now, an embodiment for the fuel-cell-driven electric vehicle will be described below with reference to the drawings. FIGs.1 through 4 show a motorcycle 10 as a fuel-cell-driven electric vehicle according to the embodiment. The motorcycle 10 is provided with a pair of wheels including a front wheel 11 and a rear wheel 12, and a vehicle body 10a to which the pair of wheels are attached. The vehicle body 10a is also provided with a vehicle body frame 13 constituting the major part of the vehicle body 10a, and a subframe 14 that can be mounted detachably to the vehicle body frame 13. In addition, the vehicle body frame 13 includes a head pipe 15 constituting the forward part of the vehicle body 10a, and a down tube 16 extending rearward from the head pipe 15.

Also, the front wheel 11 is rotatably supported at the lower end of a front fork 17 bifurcated in the lower part. That is, both lower ends of the front fork 17 rotatably support the central shaft of the front wheel 11 (not shown) from both sides to allow rotation of the front wheel 11 around the central shaft. Further, the upper end of the front fork 17 is joined to the lower end of a steering shaft 18 disposed inside the head pipe 15. The steering shaft 18 is mounted inside the head pipe 15 in the manner that the steering shaft 18 can turn around the axis of the head pipe 15, with the upper end of the steering shaft 18 protruding from the head pipe 15 and extending upward. In addition, the upper end of the steering shaft 18 is joined to a handle 19.

Thus, as the steering shaft 18 is turned around the axis by the turning operation of the handle 19, the front wheel 11 changes its direction to both sides corresponding to the degree of rotation of the steering shaft 18. A grip (not shown) is provided on both left and right ends of the handle 19. One of these grips is provided in the manner that allows rotation around the axis, so that it is not only used as a grip portion to be held by hand, but it also constitutes a manipulator for adjusting the rotational speed of a driving motor 44a which will be described later. On the other hand, the other grip is fixed to the handle 19 to be used as a grip portion to be held by hand. In addition, a brake lever (not shown) is provided in the vicinity of each grip, which is urged away from the grip and works to restrict the rotation of the front wheel 11 or the rear wheel 12 when it is pulled toward the grip.

The down tube 16 includes a pair of main frames 16a, 16b with their forward ends (upper ends) being joined to either sides of the head pipe 15 at its lower part. Each of the main frames 16a, 16b, with the forward ends being joined to the head pipe 15, extends downward to the rear from the joining position to the head pipe 15, while the distance between the main frames 16a, 16b gets larger. Then, the main frames 16a, 16b bend to extend further in the horizontal direction to the rear. Further, the rear end parts of the main frames 16a, 16b extend upward to the rear keeping the distance between them. The rear ends of the main frames 16a, 16b are joined to a plate attaching member 21 that is disposed horizontally.

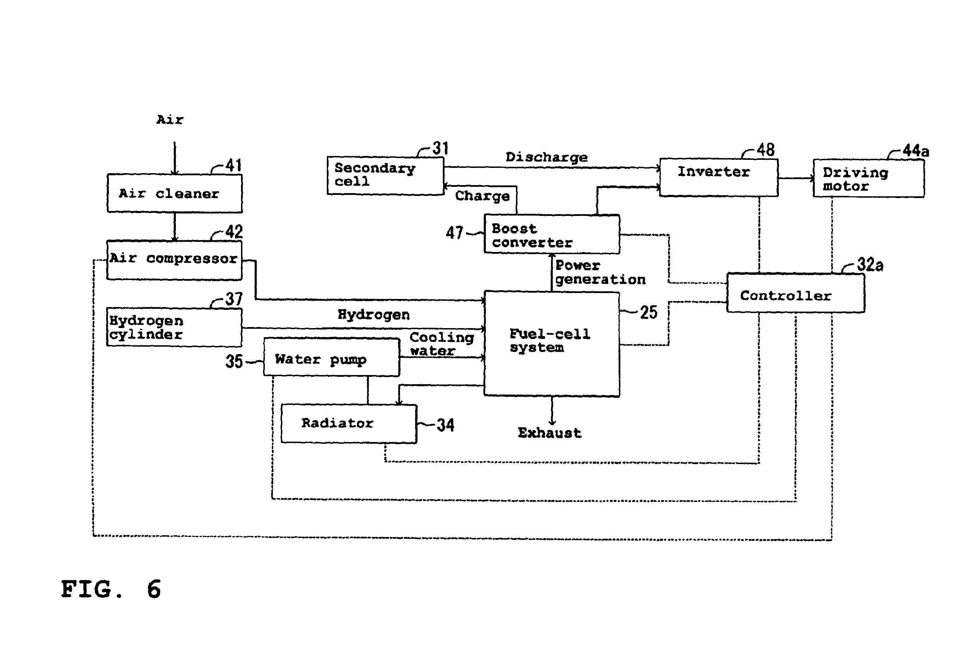

In addition, a cross member 22 is laid across the upper faces in the rear part of the main frames 16a, 16ba are. The cross member 22 is formed into a bar shape with its both ends being bent generally at right angles. The bent part at both ends are joined to the main frames 16a, 16b, while the main part of the cross member 22 is protruding from the upper face of the main frames 16a, 16b. In addition, attaching pieces 22a, 22b, each having a screw hole, are provided on both sides of the cross member 22. Also, a mounting board 23 protruding below the main frames 16a, 16b the lower ends of the main frames 16a, 16b. The top face of the mounting board 23 is formed into a concave in which a fuel-cell accommodating part 24 is provided. The fuel-cell accommodating part 24 is constructed by a box having an opening and closing lid 24a that allows open and closed states to the top opening of the box. A fuel-cell system 25 (See FIG. 6) is accommodated in the box.

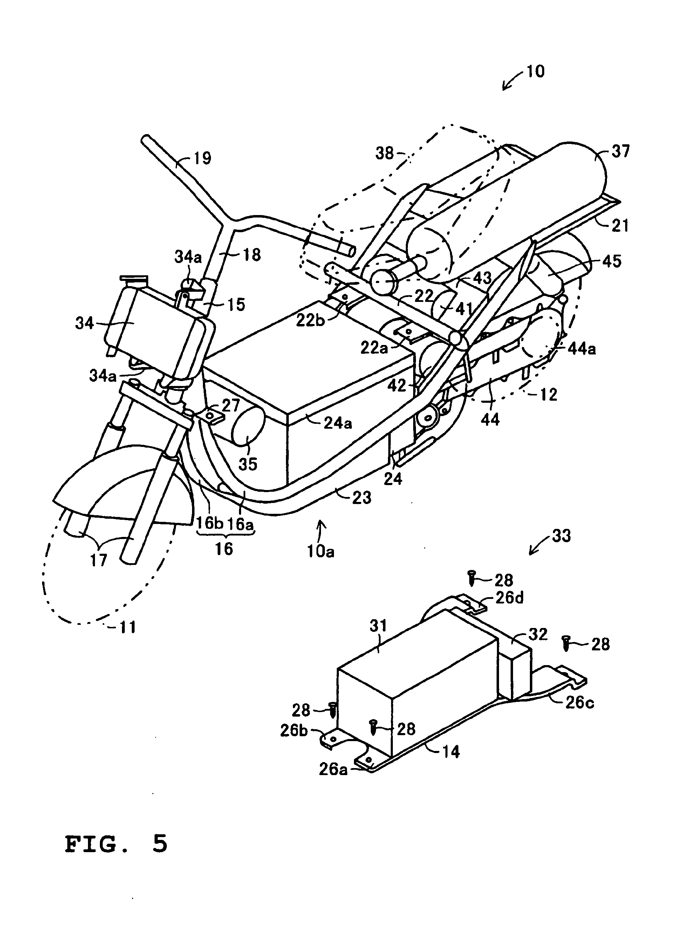

At the same time, the plate subframe 14 is mounted between the forward part of the down tube 16 and the cross member 22 provided in the rear part of the down tube 16. As shown in FIG. 5, the subframe 14 has attaching pieces 26a, 26b, 26c, and 26d, provided on both sides at the forward end, and on both sides at the rear end, each having a screw hole and protruding forward or rearward. In addition, a plate attaching piece 27 having a screw hole is provided each on the left and right sides of the upper front part of the down tube 16. The forward end of the subframe 14 is fixed to the forward part of the down tube 16 by tightening mounting bolts 28 in a pair of screw holes on the left and right sides after aligning the screw holes on the attaching piece 26a, 26b, and those on the attaching piece 27.

Further, the rear end of the subframe 14 is fixed to the rear part of the down tube 16 by tightening the mounting bolts 28 in the pair of screw holes after aligning the screw holes on the attaching pieces 26c, 26d, with the corresponding screw holes on the attaching pieces 22a, 22b. In addition, a secondary cell 31 is fixed on the top of the subframe 14 at a little forward of its center, while a control unit 32 is fixed on the top of the subframe 14 in its rear part. The subframe 14, the secondary cell 31, and the control unit 32 are assembled integrally to form a unit body 33.

Therefore, the fuel-cell system 25 in the fuel-cell accommodating part 24 can be exposed once the unit body 33 is dismounted from the vehicle body 10a and the opening and closing lid 24a of the fuel-cell accommodating part 24 is lifted open. The maintenance work for the fuel-cell system 25 can be performed in this condition. That is, the space for installing the unit body 33 becomes an open space for the maintenance work once the unit body 33 is dismounted. Note that the length of the unit body 33 along the vehicle body is designed to be smaller than the length of the fuel-cell accommodating part 24 along the vehicle body.

Also, a radiator 34 is installed in front of the head pipe 15 by means of a fastening member 34a, and a water pump 35 is installed in front of the fuel-cell accommodating part 24 located in the forward part of the down tube 16 and below the subframe 14 (the secondary cell 31). The radiator 34 and the water pump 35 are connected by the outgoing part of a cooling water pipe 36a. The cooling water pipe 36a extends further from the water pump 35 toward the fuel-cell accommodating part 24, enters into the fuel-cell accommodating part 24 through the front face of the fuel-cell accommodating part 24, and connected to the fuel-cell system 25. The cooling water pipe 36a extends from the radiator 34 to the fuel-cell system 25, running along the down tube 16 and below the subframe 14.

At the same time, a returning part of the cooling water pipe 36b extends from the fuel-cell system 25 to the radiator 34 through the front face of the fuel-cell accommodating part 24. The cooling water pipe 36b is also installed to run below the subframe 14 and along the down tube 16. Thus, the operation of the water pump 35 makes the cooling water in the radiator 34 delivered to the fuel-cell system 25 by way of the cooling water pipe 36a to cool down the fuel-cell system 25. After absorbing the heat while cooling down the fuel-cell system 25, the cooling water is returned to the radiator by way of the cooling water pipe 36b and is cooled down as it flows through the radiator 34.

In addition, a hydrogen cylinder 37, filled with hydrogen to be delivered to the fuel-cell system 25 and serving as a hydrogen storage container of the present invention, is installed on the top face of the attaching member 21 coupled to the rear end of the main frames 16a, 16b. The hydrogen cylinder 37 is connected to the fuel-cell system 25 in the fuel-cell accommodating part 24 by way of a gas pipe (not shown), for delivering the hydrogen gas contained in it to the fuel-cell system 25 through the gas pipe. Further, a seat 38 is disposed above the forward part of the hydrogen cylinder 37. The seat 38 is joined to the rear part of the down tube 16 via a supporting member 38a.

Also, an air cleaner 41 is installed in the rear of the cross member 22 located in the rear part of the down tube 16, while an air compressor 42 is installed in front of the cross member 22 located in the rear part of the down tube 16. In addition, a mounting board 43 is provided between the main frames 16a, 16b in the rear part of the down tube 16. The air cleaner 41 and the air compressor 42 is fixed to the down tube 16 by way of the mounting board 43.

A gas pipe (not shown) is installed to connect the air cleaner 41 and the air compressor 42, as well as the air compressor 42 and the fuel-cell system, respectively. The operation of the air compressor 42 draws in the ambient air by way of the air cleaner 41 and delivers it into the fuel-cell system 25. Foreign matters mixed in the ambient air are eliminated while the air is passing through the air cleaner 41. In addition, a rear arm including a pair of arm members (not shown) extending rearward is joined to the lower rear part of the down tube 16 via a connecting member 43a.

Further, the central shaft of the rear wheel 12 is rotatably supported from both sides by the rear end of both arm members of the rear arm to allow rotation of the rear wheel 12 around its central axis. At the same time, a motor unit 44 is installed to one of the arm members of the rear arm on its outer face so as to cover the arm member. The motor unit 44 accommodates a driving motor 44a operating with the electricity generated by the fuel-cell system 25, and reduction gears. The operation of the driving motor 44a makes the rear wheel 12 rotate to run the motorcycle 10.

Also, rear cushions 45 are placed across the rear ends of the down tube 16 and the upper rear ends of the rear arm respectively. The rear end of the rear arms are structured to allow the swinging motion by means of the expansion and contraction of the rear cushions 45. In addition, a drum brake (not shown) is installed on the inside of the motor unit 44. The driving motor 44a operates in proportion to the degree of the grip turning under the control of a controller 32a included in the control unit 32, to generate the driving force on the rear wheel 12 automatically. The driving motor 44a ceases its operation under the control of the controller 32a when the brake lever is activated.

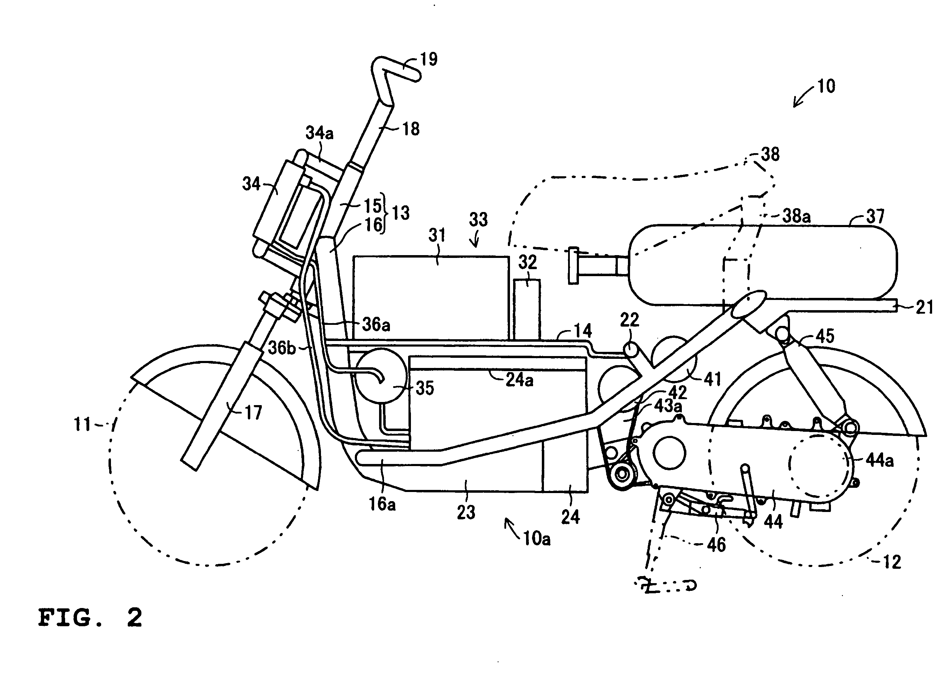

The motorcycle 10 is provided with a rotary stand 46 for keeping the motorcycle 10 in the stand-up condition while it is in the stationary state. While the motorcycle 10 is running, the stand 46 is maintained in the raised position as illustrated by the solid line in FIG. 2. While the motorcycle 10 is at rest, the stand 46 is set in the lowered position as illustrated by the chain double-dashed line in FIG. 2 to make the stand 46 support the motorcycle 10. Further, the control unit 32 is provided with a boost converter 47 and an inverter 48 as shown in FIG. 6.

The fuel-cell system 25 causes reaction of the oxygen in the air delivered by the air compressor 42, with the hydrogen delivered by the hydrogen cylinder 37 to generate water as well as electricity. Then, the boost converter 47 boosts up the electricity generated by the fuel-cell system 25 and sends it to the inverter 48 or sends it to the secondary cell 31 for charging the secondary cell 31. When necessary, the secondary cell 31 discharges electricity to the inverter 48 used as an auxiliary power. The inverter 48 changes DC electricity generated by the fuel-cell system 25 or DC electricity delivered by the secondary cell 31 into AC electricity.

The controller 32a controls the water pump 35, the air compressor 42, the driving motor 44a and so on in accordance with the grip manipulation by the operator, the predetermined program, and so on. Note that, although not shown in the drawings, the motorcycle 10 is provided with a cover member to cover up the exterior of the given parts so that each device including the radiator 34 and the hydrogen cylinder 37 is not visible from the outside to assure the betterment of the design aspect. The motorcycle 10 is also provided with the power switch (not shown) for cranking.

In the arrangement described above, the operator first sits on the seat 38 with the knees apart when he or she gets on the motorcycle 10. Since the length of the unit body 33 positioned under the operator's crotch is smaller along the vehicle body width than the length of the fuel-cell accommodating part 24 along the vehicle body width, the operator can sit on the seat 38 in the comfortable posture without the need for spreading out the legs widely. Next, the operator turns on the power switch. This action starts the air supply to the fuel-cell system 25 from the air compressor 42. At the same time, the hydrogen is supplied to the fuel-cell system 25 from the hydrogen cylinder 37, and the fuel-cell system 25 generates electricity by reacting the oxygen in the air with the hydrogen.

During the process, the fuel-cell system 25 is cooled down and kept at the prescribed temperature by the cooling water delivered by the water pump 35. Also, the fuel-cell system 25 releases the water generated by the reaction of oxygen with hydrogen into the environment along with the exhaust. Then the operator manipulates the grip to the extent that can accelerate the motorcycle to the desired speed. This action causes the controller 32a to activate the driving motor 44a, and the driving force is generated on the rear wheel 12. On the other hand, the operator manipulates the brake bar as needed to reduce the running speed of the motorcycle 10. This action causes the motorcycle 10 to decelerate to the extent the brake bar was manipulated. To cease the running of the motorcycle 10, turn off the power switch and maintain the motorcycle 10 in the stand-up condition by turning the stand 46 to the lowered position to put it in contact with the ground.

Once the need for the maintenance work on the fuel-cell system 25 arises, each mounting bolt 28 is removed, and the unit body 33 is dismounted from the vehicle body 10a as shown in FIG. 5. Then, the opening and closing lid 24a of the fuel-cell accommodating part 24 is lifted to open, the maintenance work is performed by the hands in the fuel-cell accommodating part 24 from the open space formed above the opening of the fuel-cell accommodating part 24. In this way, the fuel-cell system 25 can be worked on while it is accommodated in the fuel-cell accommodating part 24 without disconnecting any pipe. Also, the trial-run for the motorcycle 10 can be carried out as it stands in the maintenance process.

Thus, in regard to the motorcycle 10 according to the present embodiment, the open space for the maintenance work is formed above the fuel-cell accommodating part 24 by dismounting the unit body 33 installed above the fuel-cell accommodating part 24 from the vehicle body 10a when the maintenance work is performed on the fuel-cell system 25. Then, lifting the opening and closing lid 24a of the fuel-cell accommodating part 24 to open, the maintenance work on the fuel-cell system 25 can be performed with the hands put in the open space for the maintenance work. Consequently, the maintenance work can be simplified because there is no need to remove the fuel-cell system 25 from the vehicle body 10a for the maintenance work, and the trial-run can be carried out as it stands in the maintenance process.

In addition, installation of the heavy fuel-cell system 25 at the bottom part of generally the center of the vehicle body 10a in the vehicle's longitudinal direction can improve the weight balance of the vehicle body 10a. Further, the installation of the heavy secondary cell 31 above the fuel-cell system 25 results in the positioning of the secondary cell 31 between the front wheel 11 and the rear wheel 12 of the vehicle body 10a. The possible weight imbalance of the vehicle body 10a due to the installation of the secondary cell 31 can be prevented by this arrangement.

In addition, since the unit body 33 is structured by the assembly of the subframe 14 detachably mounted to the down tube 16, the secondary cell 31, and the control unit 32, the secondary cell 31 can be dismounted from the vehicle body 10a together with the subframe 14. This makes it easier for the secondary cell 31 to be mounted to and dismounted from the vehicle body 10a. Further, the vehicle body 10a as a whole has higher rigidity by assembling the subframe 14 to the down tube 16. The rigidity of the down tube 16 is improved further by the cross member 22 laying across the rear parts of the main frames 16a, 16b.

Also, as various on-board device including the radiator 34, the water pump 35, the air cleaner 41, the air compressor 42 and the hydrogen cylinder 37 are fixed to the vehicle body frame 13, the fuel-cell system 25 can be put into operation while the unit body 33 is dismounted from the vehicle body 10a. This enables the practice of maintenance work while carrying out the trial-run. According to the embodiment described above, the maintenance work can be performed on the fuel-cell system 25 without removing any parts including cooling water pipes 36a, 36b, the disconnection of which takes much time and labor. This is useful for preventing the possible water leak while removing the cooling water pipes 36a, 36b.

Further, the radiator 34 and the water pump 35 are positioned in the forward part of the vehicle body 10a in the concentrated manner. This allows the use of shorter cooling water pipes 36a, 36b for connecting the radiator 34 and the fuel-cell system 25. In addition, the installation of the cooling water pipes 36a, 36b not above the secondary cell 31 and the fuel-cell accommodating part 24 prevents possible damages on the electric parts and other parts due to the possible short circuit caused by the water leakage. Also the installation of the hydrogen cylinder 37 in the upper rear part of the vehicle body 10a allows the discharge of hydrogen to the outside of the vehicle body 10a utilizing the running wind, if the hydrogen leak from the hydrogen cylinder 37, thus accumulation of the hydrogen in a part of vehicle body 10a can be prevented.

At the same time, the installation of the air compressor 42 in the position below the hydrogen cylinder 37 and in the rear vicinity of the fuel-cell accommodating part 24 prevents the possible absorption of the hydrogen into the air compressor 42 below, if the hydrogen leak from the hydrogen cylinder 37. Consequently, the air/fuel ratio error due to the absorption of the hydrogen into the air compressor 42 can be prevented. Also, the installation of the air compressor 42 in the rear vicinity of the fuel-cell accommodating part 24 allows the use of shorter gas pipe for connecting the air compressor 42 and the fuel-cell accommodating part 24. It allows the reduction of pressure loss in the gas piping as well.

In addition, the installation of the seat 38 above the hydrogen cylinder 37 results in the positioning of the air compressor 42 remotely below the operator sitting on the seat 38. This prevents the operating sound of the air compressor 42 from being a nuisance to the operator's ears. Further, the smaller length of the unit body 33 along the vehicle body width in comparison with the length of the fuel-cell accommodating part 24 along the vehicle body width allows the operator to take more comfortable posture when sitting on the seat 38.

The fuel-cell-driven electric vehicle according to the present teaching is not limited to the aforementioned embodiment, but can be modified for implementation as deemed to be appropriate. For instance, the fuel-cell-driven electric vehicle in the aforementioned embodiment is the motorcycle 10. However, the fuel-cell-driven electric vehicle may be a motor three-wheeler or may be a motor four-wheeler. Further in the aforementioned embodiment, the secondary cell 31 is assembled into the unit body 33 to be mounted and dismounted from the vehicle body 10a together with the subframe 14. However, this may be arranged but not according to the claimed invention to remove only the secondary cell 31, while the subframe 14 is kept on the vehicle body 10a. In this case, the subframe 14 is formed not into a plate but into a frame or the like, so that the hands can be put inside though the frame. Also in the aforementioned embodiment, the hydrogen storage container is constructed by the hydrogen cylinder 37. However, the hydrogen storage container can be constructed by other device than a cylinder, so far as the hydrogen can be stored in it.

The description above discloses (amongst others), a first embodiment of a fuel-cell-driven electric vehicle according to the invention as claimed in independent claim 1.

According to the fuel-cell-driven electric vehicle of the first embodiment, when the maintenance work is performed on the fuel-cell system, open space for the maintenance work is formed above the fuel-cell accommodating part by dismounting the unit bodyinstalled above the fuel-cell accommodating part from the vehicle body. Also, an opening and closing lid is attached to the top of the fuel-cell accommodating part. Thus, after lifting the opening and closing lid of the fuel-cell accommodating part to open, the maintenance work can be performed on the fuel-cell system with the hands put in the open space for the maintenance work. The maintenance work in this case mainly represents the inspection for the leak and improper connection regarding the pipes of each component connected to the fuel-cell system. The secondary cell is a rechargeable stand-by battery.

Consequently, according to the first embodiment, the maintenance work can be simplified because there is no need to remove the fuel-cell system from the vehicle body for the maintenance work, and the trial-run can be carried out as it stands in the maintenance process. In addition, since the heavy fuel-cell system is disposed at the bottom area of the vehicle body and the maintenance work can be performed without removing the fuel-cell system from the vehicle body, the weight balance of the vehicle body is improved to facilitate the maintenance work. Further, as the heavy secondary cell is installed above the fuel-cell system and thus the secondary cell is positioned between the front wheel and the rear wheel, the installation of the secondary cell will not impair the weight balance of the vehicle body. Note that the fuel-cell system in this case denotes package device including the power generating equipment.

According to a second embodiment of the fuel-cell-driven electric vehicle, the vehicle body has a vehicle body frame constituting the major part of the vehicle body, and a subframe detachably mounted to the vehicle body frame and extending in fore-and-aft direction above the fuel-cell accommodating part, and that the secondary cell is attached to the subframe. According to this structure, the subframe can be utilized as a frame for enhancing the rigidity of the vehicle body, and at the same time the subframe can be utilized as the mounting bracket for the secondary cell. Further, since the secondary cell is mounted on the subframe that is detachable from the vehicle body frame, the secondary cell can be dismounted from the vehicle body frame together with the subframe, thus the mounting and dismounting of the secondary cell to or from the vehicle body are facilitated.

According to a third embodiment of the fuel-cell-driven electric vehicle, the vehicle body frame has a head pipe joining a handle at its upper end while rotatably supporting the steering shaft joining the front wheel via the connecting member at its lower end, and a down tube having a pair of members extending from the head pipe slantingly downward to the rear, then extending generally horizontally to the rear passing through the left and right sides of or below the fuel-cell accommodating part and further extending slantingly upward to the rear, with the subframe being laid across the forward part and the rear part of the down tube. According to this structure, the rigidity of the entire vehicle body frame is improved, and the rigidity of the entire vehicle body is improved by the presence of the subframe.

According to a fourth embodiment of the fuel-cell-driven electric vehicle, a cross member bridges the pair of members constituting the down tube at the rear part of the down tube, while a pair of left and right attaching portions are provided in the rear part of the subframe, with these attaching portions detachably fastened to both sides of the cross member. According to this structure, the rigidity in the rear part of the vehicle body frame improves by the presence of the cross member. Also, the rigidity of the vehicle body is improved further, since the subframe is attached still more firmly to the vehicle body frame via the cross member.

According to a fifth embodiment of the fuel-cell-driven electric vehicle, various types of on-board devices are fixed to the vehicle body frame, including: the radiator and the water pump constituting the cooling system components for cooling the fuel-cell system; the air compressor and the air cleaner constituting the air system component for delivering the air to the fuel-cell system; and the hydrogen storage container constituting the hydrogen system component for delivering the hydrogen to the fuel-cell system.

According to this structure, the fuel-cell system can be put into operation while the secondary cell is dismounted from the vehicle body together with the subframe, since each device required to activate the fuel-cell system is kept installed on the vehicle body. This enables the practice of maintenance work while carrying out the trial-run. Further according to this structure, the maintenance work on the fuel-cell system is practicable without the need for removing the cooling system components, etc. which take much time and labor for the removal. Consequently, possible water leak from the cooling system components can be prevented when the cooling water pipes are removed, for instance.

According to a sixth embodiment of the fuel-cell-driven electric vehicle, the secondary cell is disposed a little forward of the fuel-cell accommodating part, a radiator is fixed in front of the vehicle body frame, the water pump is installed in front of the fuel-cell accommodating part and below the secondary cell, an outgoing part of a cooling water pipe connecting the radiator and the fuel-cell system is routed from the radiator along the vehicle body frame to the water pump and further routed from the water pump through the area below the subframe to be connected to the fuel-cell system via the front face of the fuel cell accommodating part, and a returning part of the cooling water pipe is routed from the fuel-cell system via the font face of the fuel-cell accommodating part along the vehicle body frame to the radiator.

According to this structure, the radiator and the water pump included in the cooling system components are located in the forward part of the vehicle body frame in the concentrated manner. This allows the use of shorter cooling water pipes connecting the radiator and the fuel-cell system. In addition, installation of the cooling water pipes not above the secondary cell and the fuel-cell accommodating part prevents damages on the electric parts and others due to the possible short circuit caused by the water leakage.

According to a seventh embodiment of the fuel-cell-driven electric vehicle, the hydrogen storage container is installed in the upper rear part of the vehicle body frame. According to this structure, the hydrogen storage container is disposed in the upper part of the vehicle body, thus, if the hydrogen leaks from the hydrogen cylinder, it is not likely that the hydrogen is trapped in some part of the vehicle body. Also, as the hydrogen storage container is disposed in the rear part of the vehicle body, the hydrogen can be discharged to the outside of the vehicle body utilizing the running wind, even if the hydrogen leaks from the hydrogen cylinder.

According to an eighth embodiment of the fuel-cell-driven electric vehicle, the air compressor is installed below the hydrogen storage container and in the rear vicinity of the fuel-cell accommodating part, and that a seat is installed above the hydrogen storage container.

According to this structure, possible absorption of the hydrogen into the air compressor below is prevented even if the hydrogen leak from the hydrogen storage container. Consequently, the air/fuel ratio error due to the absorption of the hydrogen into the air compressor can be prevented. Also, the installation of the air compressor in the rear vicinity of the fuel-cell accommodating part allows the use of shorter gas pipe for connecting the air compressor and the fuel-cell accommodating part. It allows the reduction of pressure loss in the gas piping as well. Further, the provision of the air compressor remotely below the operator sitting on the seat prevents the operating sound of the air compressor from being a nuisance to the operator's ears.

According to a ninth embodiment of the fuel-cell-driven electric vehicle, the secondary cell and the subframe constitute a unit body that allows them to be mounted to or dismounted from the vehicle body simultaneously, and that the length of the unit body along the vehicle body width is set to be smaller than the length of the fuel-cell accommodating part along the vehicle body width. According to this structure, the operator can take more comfortable posture when he or she sits on the seat as if straddling over the unit body and the fuel-cell accommodating part.

According to a tenth embodiment of the fuel-cell-driven electric vehicle, the fuel-cell-driven electric vehicle is a motorcycle, a motor three-wheeler, or a motor four-wheeler. According to the characteristic, a motorcycle, a motor three-wheeler, or a motor four-wheeler can be obtained on which the fuel-cell system maintenance work is easy, the rigidity of the vehicle body is superior, and each component can be mounted to the vehicle body in a compact configuration.

Accordingly, according to a preferred first aspect, there is disclosed a fuel-cell-driven electric vehicle utilizing the electric power generated by a fuel-cell system for operation, wherein a fuel-cell accommodating part having an opening and closing lid on the top of it is provided between a front wheel and a rear wheel on a vehicle body of the fuel-cell-driven electric vehicle for installing a fuel-cell system inside the fuel-cell accommodating part, and secondary cell is detachably mounted above the fuel-cell accommodating part of the vehicle body so that an open space for the maintenance work is formed above the fuel-cell accommodating part once the secondary cell is dismounted from the vehicle body.

Further, according to a preferred second aspect, the vehicle body has a vehicle body frame constituting the major part of the vehicle body, and a subframe detachably mounted to the vehicle body frame and extending in fore-and-aft direction above the fuel-cell accommodating part, with the secondary cell being attached to the subframe.

Further, according to a preferred third aspect, the vehicle body frame has a head pipe joining a handle at its upper end while rotatably supporting the steering shaft joining the front wheel via the connecting member at its lower end, and a down tube having a pair of members extending from the head pipe slantingly downward to the rear, then extending generally horizontally to the rear passing through the left and right sides of or below the fuel-cell accommodating part and further extending slantingly upward to the rear, with the subframe bridging the forward part and the rear part of the down tube.

Further, according to a preferred fourth aspect, a cross member is laid across the pair of members constituting the down tube at the rear part of the down tube, while a pair of left and right attaching portions are provided in the rear part of the subframe, with these attaching portions detachably fastened to both sides of the cross member.

Further, according to a preferred fifth aspect, various on-board devices are fixed to the vehicle body frame, including: the radiator and the water pump constituting the cooling system; components for cooling the fuel-cell system; the air compressor and the air cleaner constituting the air system component for delivering the air to the fuel-cell system, and the hydrogen storage container constituting the hydrogen system component for delivering the hydrogen to the fuel-cell system.

Further, according to a preferred sixth aspect, the secondary cell is disposed a little forward of the fuel-cell accommodating part, a radiator is fixed in front of the vehicle body frame, the water pump is installed in front of the fuel-cell accommodating part and below the secondary cell, an outgoing part of a cooling water pipe connecting the radiator and the fuel-cell system is routed from the radiator along the vehicle body frame to the water pump and further routed from the water pump through the area below the subframe to be connected to the fuel-cell system via the front face of the fuel cell accommodating part, and a returning part of the cooling water pipe is routed from the fuel-cell system via the font face of the fuel-cell accommodating part along the vehicle body frame to the radiator.

Further, according to a preferred seventh aspect, the hydrogen storage container is installed in the upper rear part of the vehicle body frame.

Further, according to a preferred eighth aspect, the air compressor is installed below the hydrogen storage container and in the rear vicinity of the fuel-cell accommodating part, and that a seat is installed above the hydrogen storage container.

Further, according to a preferred ninth aspect, the secondary cell and the subframe constitute a unit body that allows them to be mounted to or dismounted from the vehicle body simultaneously, and that the length of the unit body along the vehicle body width is set to be smaller than the length of the fuel-cell accommodating part along the vehicle body width.

Further, according to a preferred tenth aspect, the fuel-cell-driven electric vehicle is a motorcycle, a motor three-wheeler, or a motor four-wheeler.

Likewise, according to a particularly preferred embodiment, in order to provide a fuel-cell-driven electric vehicle on which the maintenance work can be performed easily without the need for removing the fuel-cell system from the vehicle body, there is disclosed a fuel-cell accommodating part 24 having an opening and closing lid 24a is provided between a front wheel 11 and a rear wheel 12 on a vehicle body 10a, and a fuel-cell system 25 is installed inside the fuel-cell accommodating part 24. A unit body 33 having a secondary cell 31 and a subframe is detachably mounted above the fuel-cell accommodating part 24 of the vehicle body 10a, so that an open space for the maintenance work is formed above the fuel-cell accommodating part 24 once the unit body 33 is dismounted from the vehicle body 10a. Also, a radiator 34, a water pump 35, an air compressor 42, an air cleaner 41, and a hydrogen cylinder 37 are fixed to the vehicle body frame 13 constituting the main body of the vehicle body 10a.

## Claims

1. Electric vehicle having a vehicle body (10a) with a fuel-cell accommodating part (24), in which a fuel-cell system (25) is accommodated, a secondary cell (31) for providing auxiliary electric power, and a control unit (32) for controlling the electric vehicle,
**characterized in that**
the secondary cell (31) and the control unit (32) are integrally assembled to a subframe (14) to form a unit body (33), which is detachably mounted above the fuel-cell accommodating part (24) of the vehicle body (13) so that an open space for the maintenance work is formed above the fuel-cell accommodating part (24) once the unit body (33) is dismounted from the vehicle body (10a).

2. Electric vehicle according to claim 1, utilizing the electric power generated by the fuel-cell system for operation, **characterized in that** the fuel-cell accommodating part (24) has an opening and closing lid (24a) on the top of it, and is provided between a front wheel (11) and a rear wheel (12) on the vehicle body (10a) of the fuel-cell-driven electric vehicle for installing the fuel-cell system (25) inside the fuel-cell accommodating part (24).

3. Electric vehicle according to claim 1 or 2, **characterized in that** the vehicle body has a vehicle body frame (13) constituting a major part of the vehicle body (10a), and the subframe (14) detachably mounted to the vehicle body frame (10a) and extending in fore-and-aft direction above the fuel-cell accommodating part (24).

4. Electric vehicle according to claim 3, **characterized in that** the vehicle body frame (13) has a head pipe (15) joining a handle (19) at its upper end while rotatably supporting a steering shaft (18) joining the front wheel (11) via a connecting member at its lower end, and a down tube (16) having a pair of members (16a, 16b) extending from the head pipe (15) slantingly downward to the rear, then extending generally horizontally to the rear passing through the left and right sides of or below the fuel-cell accommodating part (24) and further extending slantingly upward to the rear, with the subframe (14) bridging the forward part and the rear part of the down tube (16).

5. Electric vehicle according to claim 4, **characterized in that** a cross member (22) is laid across the pair of members (16a, 16b) constituting the down tube (16) at the rear part of the down tube (16), while a pair of left and right attaching portions (22a, 22b) are provided in the rear part of the subframe (14), with these attaching portions (22a, 22b) detachably fastened to both sides of the cross member (22).

6. Electric vehicle according to one of the claims 1 to 4, **characterized in that** various on-board devices are fixed to the vehicle body frame (13), including: a radiator (34) and a water pump (35) constituting a cooling system component for cooling the fuel-cell system (25); an air compressor (42) and an air cleaner (41) constituting an air system component for delivering the air to the fuel-cell system (25), and a hydrogen storage container (37) constituting a hydrogen system component for delivering the hydrogen to the fuel-cell system (25).

7. Electric vehicle according to claim 6, **characterized in that** the secondary cell (31) is disposed a little forward of the fuel-cell accommodating part (24), the radiator (34) is fixed in front of the vehicle body frame (13), the water pump (35) is installed in front of the fuel-cell accommodating part (24) and below the secondary cell (31), an outgoing part of a cooling water pipe (36a) connecting the radiator (34) and the fuel-cell system (25) is routed from the radiator (34) along the vehicle body frame (13) to the water pump (35) and further routed from the water pump (35) through an area below the subframe (14) to be connected to the fuel-cell system (25) via the front face of the fuel cell accommodating part (24), and a returning part of the cooling water pipe (36b) is routed from the fuel-cell system (25) via the font face of the fuel-cell accommodating part (24) along the vehicle body frame (13) to the radiator (34).

8. Electric vehicle according to claim 6 or 7, **characterized in that** the hydrogen storage container (37) is installed in an upper rear part of the vehicle body frame (13).

9. Electric vehicle according to claim 8, **characterized in that** the air compressor (42) is installed below the hydrogen storage container (37) and in the rear vicinity of the fuel-cell accommodating part (24), and a seat (38) is installed above the hydrogen storage container (37).

10. Electric vehicle according to claim 9, **characterized in that** a length of the unit body (33) along the vehicle body width is set to be smaller than a length of the fuel-cell accommodating part (24) along the vehicle body width.

11. Electric vehicle according to one of the claims 1 to 10, **characterized in that** the fuel-cell-driven electric vehicle is a motorcycle, a motor three-wheeler, or a motor four-wheeler.

## Patentansprüche

1. Elektrofahrzeug mit einer Fahrzeugkarosserie (10a) mit einem Brennstoffzellenunterbringungsteil (24), in der ein Brennstoffzellensystem (25) untergebracht ist, einer Sekundärzelle (31) zum Bereitstellen von elektrischen Hilfsenergie und einer Steuereinheit (32) zum Steuern des Elektrofahrzeuges,
**dadurch gekennzeichnet, dass**
die Sekundärzelle (31) und die Steuereinheit (32) einstückig an einem Unterrahmen (14) montiert sind, um eine Körpereinheit (33) zu bilden, die lösbar oberhalb des Brennstoffzellenunterbringungsteils (24) der Fahrzeugkarosserie (10a) montiert ist, so dass ein offener Raum für die Instandhaltungsarbeiten oberhalb des Brennstoffzellenunterbringungsteils (24) gebildet wird, wenn die Körpereinheit (33) von der Fahrzeugkarosserie (10a) demontiert ist.

2. Elektrofahrzeug nach Anspruch 1, das Elektroenergie, erzeugt durch ein Brennstoffzellensystem für den Betrieb, verwendet, **dadurch gekennzeichnet, dass** das Brennstoffzellenunterbringungsteil (24) einen Öffnungs- und Schließdeckel (24a) an seiner Oberseite hat und zwischen dem Vorderrad (11) und einem Hinterrad (12) an der Fahrzeugkarosserie (10a) des durch Brennstoffzellen angetriebenen Elektrofahrzeuges zum Installieren des Brennstoffzellensystems (25) innerhalb des Brennstoffzellenunterbringungsteils (24) vorgesehen ist.

3. Elektrofahrzeug nach Anspruch 1 oder 2, **dadurch gekennzeichnet, dass** die Fahrzeugkarosserie einen Fahrzeugkarosserierahmen (13) hat, der einen Hauptteil der Fahrzeugkarosserie (10a) bildet, und der Unterrahmen (14) lösbar an dem Fahrzeugkarosserierahmen (13) montiert ist und sich in nach vorn- und- nach hinten- Richtung oberhalb des Brennstoffzellenunterbringungsteils (24) erstreckt.

4. Elektrofahrzeug nach Anspruch 3, **dadurch gekennzeichnet, dass** der Fahrzeugkarosserierahmen (13) ein Kopfrohr (15) hat, das einen Handgriff (19) an seinem oberen Ende verbindet, drehbar lagernd eine Steuerungswelle (18), die das Vorderrad (11) über ein Verbindungsteil an seinem unteren Ende verbindet, und ein Abwärtsrohr (18) mit einem Paar von Teilen (16a, 16b), die sich von dem Kopfrohr (15) schräg nach unten und nach hinten erstrecken, dann sich im Wesentlichen horizontal nach hinten erstrecken, die linke und rechte Seite von oder unter dem Brennstoffzellenunterbringungsteil (24) passieren uns sich weiter schräg nach oben und nach hinten erstrecken, wobei der Unterrahmen (14) den vorderen Teil und den hinteren Teil des Abwärtsrohres (16) überbrückt.

5. Elektrofahrzeug nach Anspruch 4, **dadurch gekennzeichnet, dass** ein Querteil (22) über das Paar von Teilen (16a, 16b), die das Abwärtsrohr (16) an dem hinteren Teil des Abwärtsrohres (16) bilden, gelegt ist, während ein Paar von linken und rechten Verbindungsabschnitten (22a, 22b) in dem hinteren Teil des Unterrahmens (14) vorgesehen sind, wobei die Verbindungsabschnitte (22a, 22b) lösbar an beiden Seiten des Querteiles (22) vorgesehen sind.

6. Elektrofahrzeug nach einem der Ansprüche 1 bis 4, **dadurch gekennzeichnet, dass** verschiedene bordeigene Vorrichtungen an dem Fahrzeugkarosserierahmen (13) befestigt sind, enthaltend: einen Kühler (34) und eine Wasserpumpe (35), die ein Kühlsystembauteil zum Kühlen des Brennstoffzellensystems (25) bilden; einen Luftkompressor (42) und einen Luftfilter (41), die ein Luftsystembauteil zum Liefern der Luft in das Brennstoffzellensystem (25) bilden, und einen Wasserstoffspeicherbehälter (37), der ein Wasserstoffsystembauteil zum Liefern des Wasserstoffs in das Brennstoffzellensystem (25) bildet.

7. Elektrofahrzeug nach Anspruch 6, **dadurch gekennzeichnet, dass** die Sekundärzelle (31) ein wenig vorwärts des Brennstoffzellenunterbringungsteils (24) angeordnet ist, der Kühler (34) vor dem Fahrzeugkarosserierahmen (13) befestigt ist, die Wasserpumpe (35) vor dem Brennstoffzellenunterbringungsteil (24) und unter der Sekundärzelle (31) installiert ist, ein herausgehendes Teil eines Kühlwasserrohres (36a), das den Kühler (34) und das Brennstoffzellensystem (25) verbindet, von dem Kühler (34) entlang des Fahrzeugkarosserierahmens (13) zu der Wasserpumpe (35) geführt ist und weiter von der Wasserpumpe (35) durch einen Bereich unter dem Unterrahmen (14) geführt ist, um mit dem Brennstoffzellensystem (25) über die vordere Fläche des Brennstoffzellenunterbringungsteils (24) verbunden zu werden, und ein Rückführteil des Kühlwasserrohres (36a), von dem Brennstoffzellensystem (25) über die vordere Fläche des Brennstoffzellenunterbringungsteils (24) entlang des Fahrzeugkarosserierahmens (13) zu dem Kühler (34) geführt ist.

8. Elektrofahrzeug nach Anspruch 6 oder 7, **dadurch gekennzeichnet, dass** der Wasserstoffspeicherbehälter (37) in einem oberen hinteren Teil des Fahrzeugkarosserierahmens (13) installiert ist.

9. Elektrofahrzeug nach Anspruch 8, **dadurch gekennzeichnet, dass** der Luftkompressor (42) unter dem Wasserstoffspeicherbehälter (37) und in der hinteren Nähe des Brennstoffzellenunterbringungsteils (24) installiert ist und ein Sitz (38) oberhalb des Wasserstoffspeicherbehälters (37) installiert ist.

10. Elektrofahrzeug nach Anspruch 9, **dadurch gekennzeichnet, dass** eine Länge der Körpereinheit (33) entlang der Breite der Fahrzeugkarosserie kleiner als eine Länge des Brennstoffzellenunterbringungsteils (24) entlang der Breite des Fahrzeuges festgelegt ist.

11. Elektrofahrzeug nach einem der Ansprüche 1 bis 10, **dadurch gekennzeichnet, dass** das durch Brennstoffzellen angetriebene Elektrofahrzeug ein Motorrad, ein Motor- Dreirad oder ein Motor- Vierrad ist.

## Revendications

1. Véhicule électrique comprenant une carrosserie de véhicule (10a) incluant une partie de logement de pile à combustible (24), dans laquelle un système de pile à combustible (25) est logé, une pile secondaire (31) pour fournir de l'énergie électrique auxiliaire, et une unité de commande (32) pour commander le véhicule électrique,
**caractérisé en ce que**
la pile secondaire (31) et l'unité de commande (32) sont assemblées d'une seule pièce en un sous-châssis (14), pour former un corps unitaire (33), monté de façon détachable au-dessus de la partie de logement de pile à combustible (24) de la carrosserie de véhicule (10a), de manière qu'un espace ouvert, pour les travaux d'entretien, soit formé au-dessus de la partie de logement de pile à combustible (24), une fois que le corps unitaire (33) a été démonté de la carrosserie de véhicule (10a).

2. Véhicule électrique selon la revendication 1, utilisant l'énergie électrique générée par le système de pile à combustible pour le fonctionnement, **caractérisé en ce que** la partie de logement de pile à combustible (24) présente au-dessus d'elle un couvercle à ouverture et fermeture (24a), et est prévue entre une roue avant (11) et une roue arrière (12) sur la carrosserie de véhicule (10a) du véhicule électrique propulsé par pile à combustible, pour installation du système de pile à combustible (25) à l'intérieur de la partie de logement de pile à combustible (24).

3. Véhicule électrique selon la revendication 1 ou 2, **caractérisé en ce que** la carrosserie de véhicule comprend un châssis de carrosserie de véhicule (13), constituant une partie principale de la carrosserie de véhicule (10a), et le sous-châssis (14), monté de façon détachable sur le châssis de carrosserie de véhicule (10a) et s'étendant dans la direction avant-arrière, au-dessus de la partie de logement de pile à combustible (24).

4. Véhicule électrique selon la revendication 3, **caractérisé en ce que** le châssis de carrosserie de véhicule (13) comprend un tube de tête (15), reliant à un guidon (19) à son extrémité supérieure, tout en supportant à rotation un arbre de direction (18) reliant à la roue avant (11), via un organe de connexion à son extrémité inférieure, et un tube descendant (18), comprenant une paire d'organes (16a, 16b) s'étendant du tube de tête (15), avec une inclinaison vers le bas, vers l'arrière, en s'étendant ensuite de façon globalement horizontale vers l'arrière, en passant par les côtés gauche et droit ou au-dessous de la partie de logement de pile à combustible (24) et, en outre, en s'étendant de façon inclinée vers le haut en allant vers l'arrière, le sous-châssis (14) pontant la partie avant et la partie arrière du tube descendant (16).

5. Véhicule électrique selon la revendication 4, **caractérisé en ce qu'**un organe transversal (22) est placé en travers de la paire d'organes (16a, 16b) constituant le tube descendant (16), sur la partie arrière du tube descendant (16), tandis qu'une paire de parties d'attachement (22a, 22b) gauche et droite sont prévues dans la partie arrière du sous-châssis (14), ces parties d'attachement (22a, 22b) étant fixées de façon détachable aux deux côtés de l'organe transversal (22).

6. Véhicule électrique selon l'une des revendications 1 à 4, **caractérisé en ce que** divers dispositifs embarqués sont fixés au châssis de carrosserie de véhicule (13), incluant : un radiateur (34) et une pompe à eau (35) constituant un composant de système de refroidissement pour refroidir le système de pile à combustible (25) ; un compresseur d'air (42) et un filtre à air (41), constituant un composant de système à air pour délivrer l'air au système de pile à combustible (25), et un réservoir de stockage d'hydrogène (37) constituant un composant de système d'hydrogène pour délivrer l'hydrogène au système de pile à combustible (25).

7. Véhicule électrique selon la revendication 6, **caractérisé en ce que** la pile secondaire (31) est disposée un peu à l'avant de la partie de logement de pile à combustible (24), le radiateur (34) est fixé à l'avant du châssis de carrosserie de véhicule (13), la pompe à eau (35) est installée à l'avant de la partie de logement de pile à combustible (24) et au-dessous de la pile secondaire (31), une partie sortante d'un tube d'eau de refroidissement (36a), reliant le radiateur (34) et le système de pile à combustible (25), chemine en partant du radiateur (34), le long du châssis de carrosserie de véhicule (13), vers la pompe à eau (35) et chemine en outre de la pompe à eau (35) en traversant une zone située au-dessous du sous-châssis (14) pour être connecté au système de pile à combustible (25), via la face avant de la partie de logement de pile à combustible (24), et une partie de retour du tube d'eau de refroidissement (36b) chemine en partant du système de pile à combustible (25), via la face avant de la partie de logement de pile à combustible (24), le long du châssis de carrosserie de véhicule (13), vers le radiateur (34).

8. Véhicule électrique selon la revendication 6 ou 7, **caractérisé en ce que** le réservoir de stockage d'hydrogène (37) est installé dans une partie arrière supérieure du châssis de carrosserie de véhicule (13).

9. Véhicule électrique selon la revendication 8, **caractérisé en ce que** le compresseur d'air (42) est installé au-dessous du réservoir de stockage d'hydrogène (37) et dans la proximité arrière de la partie de logement de pile à combustible (24), et un siège (38) est installé au-dessus du réservoir de stockage d'hydrogène (37).

10. Véhicule électrique selon la revendication 94, **caractérisé en ce qu'**une dimension du corps unitaire (33), dans la largeur de la carrosserie de véhicule, est inférieure à une dimension de la partie de logement de pile à combustible (24), dans la largeur de la carrosserie de véhicule.

11. Véhicule électrique selon l'une des revendications 1 à 10, **caractérisé en ce que** le véhicule électrique propulsé par pile à combustible est un motocycle, un véhicule à trois roues, ou un véhicule automobile à quatre roues.
